# FASCICULE DE BREVET EUROPEEN

(11) **EP 2 328 808 B1**
(45) Date de publication et mention de la délivrance du brevet: **24.07.2013**
(21) Numéro de dépôt: 09748363.0
(22) Date de dépôt: 25.09.2009
(51) Int. Cl.: B64D 33/02, B64D 29/06, B64D 29/08

(54) **NACELLE POUR TURBOREACTEUR**
TURBOLUFTSTRAHLTRIEBWERK
TURBOJET ENGINE NACELLE

(30) Priorité: 01.10.2008 FR 0805421
(43) Date de publication de la demande: 08.06.2011
(73) Titulaire: Aircelle, 76700 Gonfreville l'Orcher (FR)
(72) Inventeur: VAUCHEL, Guy, Bernard, F-76600 Le Havre (FR); DAUGET, Jean-Philippe, F-31170 Tournefueille (FR); BEILLIARD, Stéphane, F-31300 Toulouse (FR)
(74) Mandataire: Gaillarde, Frédéric F. Ch.
(86) Numéro de dépôt international: PCT/FR2009/001141
(87) Numéro de publication internationale: WO 2010/037923

(56) Documents cités:
- FR-A- 2 323 883
- FR-A- 2 757 823
- FR-A- 2 906 568

## Description

La présente invention se rapporte à une nacelle pour turboréacteur comprenant une structure d'entrée d'air apte à canaliser un flux d'air vers une soufflante du turboréacteur et une structure médiane destinée à entourer ladite soufflante et à laquelle est rattachée la structure d'entrée d'air.

D'une façon générale, une nacelle d'aéronef présente une structure comprenant une structure d'entrée d'air, une structure médiane et une section aval. On entend ici par le terme « aval » la direction correspondant au sens du flux d'air froid pénétrant dans le turboréacteur. Le terme « amont » désigne la direction opposée.

La structure d'entrée d'air est située en amont du turboréacteur servant à propulser l'aéronef. En aval de la structure d'entrée d'air, la structure médiane est destinée à entourer une soufflante du turboréacteur. Plus en aval encore se situe la section aval abritant en général des moyens d'inversion de poussée destinés à entourer la chambre de combustion du turboréacteur. La nacelle se termine par une tuyère d'éjection dont la sortie est située en aval du turboréacteur.

La structure d'entrée d'air comprend, d'une part, une lèvre d'entrée d'air et d'autre part, une structure aval sur laquelle est rapportée la lèvre. La lèvre d'entrée d'air est adaptée pour permettre la captation optimale vers le turboréacteur de l'air nécessaire à l'alimentation de la soufflante et des compresseurs internes du turboréacteur. La structure aval, quant à elle, est destinée à canaliser convenablement l'air vers les aubes de la soufflante. Cette structure aval comporte généralement un panneau externe et un panneau interne. Le panneau interne comporte une virole acoustique permettant d'atténuer les bruits engendrés par le turboréacteur ainsi que les vibrations des structures. La structure aval ainsi que la lèvre d'entrée d'air sont rattachées en amont d'un carter de la soufflante appartenant à la structure médiane de la nacelle.

Selon les conditions de température et d'humidité relative au sol ou en vol, du givre peut se déposer sur le profil de la lèvre, notamment au niveau du profil intérieur. Cette formation de givre peut être dangereuse pour le fonctionnement mécanique des parties fixes et tournantes du turboréacteur et occasionner une diminution des performances. Des systèmes de dégivrage de cette partie de la lèvre d'entrée d'air ont donc été mis au point pour remédier à ce problème. On peut notamment citer les documents US 4 688 757 et EP 1 495 963.

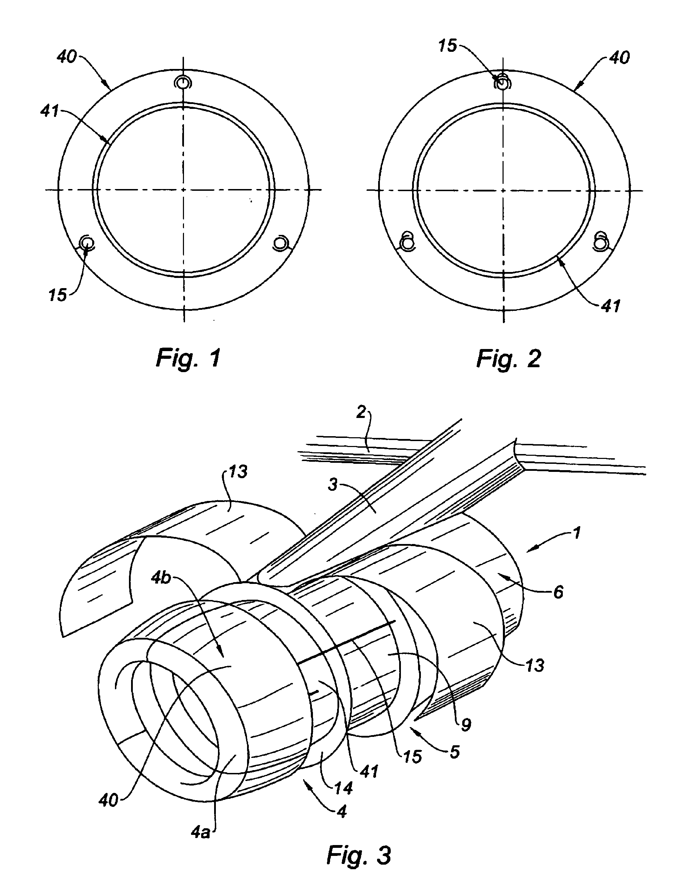

Il est connu de réaliser les opérations de maintenance sur ces équipements logés à l'intérieur de la structure d'entrée d'air en coulissant le panneau externe 40 intégrant la lèvre d'entrée d'air en amont de la structure médiane 5 par des moyens de guidage 15 (voir figure 1). Généralement, de tels moyens de guidage 15 sont sous la forme d'un système de rails.

Cependant, les moyens de guidage 15, notamment les rails, ont tendance à se déformer lors du passage de la position de fermeture à la position d'ouverture (voir figure 2). On entend ici par « position d'ouverture » la configuration dans laquelle la structure d'entrée d'air est translatée vers l'amont. La position d'ouverture correspond à une configuration où l'aéronef est au sol pour réaliser une maintenance. A l'inverse, on entend ici par « position de fermeture » la configuration dans laquelle la lèvre d'entrée d'air est rattachée à l'extrémité amont du ou des panneaux internes. La position de fermeture correspond à une configuration où l'aéronef est apte à voler.

En position d'ouverture, les moyens de guidage, notamment le système de rails, supportent la masse de l'ensemble mobile qui est supérieure en général à la tenue en flexion des rails. De ce fait, comme représenté à la figure 2, il existe une déformation des moyens de guidage 15 qui se traduit, dans le cas des systèmes de rails, par un fléchissement de ces derniers par rapport à leur axe. La déformation peut être également accentuée par des facteurs externes tels que le vent. Une telle déformation rend la manoeuvre d'ouverture plus difficile.

De plus, il existe un risque que l'extrémité amont des rails soit utilisée comme barreau d'échelle par l'opérateur accentuant encore davantage la déformation.

Une solution, décrite dans le document FR 2 906 568, consiste à équiper les rails de renforts empêchant toute déformation de ceux-ci.

Un but de la présente invention est donc de fournir une nacelle limitant la déformation des moyens de guidage.

A cet effet, selon un premier aspect, l'invention a pour objet une nacelle pour turboréacteur comprenant :
- une structure d'entrée d'air apte à canaliser un flux d'air vers une soufflante du turboréacteur et comprenant au moins un panneau externe longitudinal intégrant une lèvre d'entrée d'air,
- une structure médiane destinée à entourer ladite soufflante et à laquelle est rattachée la structure d'entrée d'air de manière à assurer une continuité aérodynamique,
- au moins un panneau interne comprenant une virole acoustique, fixée à son extrémité aval à une extrémité amont de la structure médiane formant avec cette dernière une structure fixe de la nacelle, et
- des moyens de guidage du ou des panneaux externes aptes à permettre un déplacement sensiblement rectiligne du panneau externe vers l'amont de la nacelle de manière à pouvoir ouvrir la structure d'entrée d'air,
remarquable en ce qu'elle comprend des moyens de renfort agencés pour, d'une part, reprendre les efforts mécaniques des moyens de guidage au-delà d'un seuil de déformation maximal prédéterminé de ces derniers lors de l'ouverture de la structure d'entrée d'air, et d'autre part, être inopérants en dessous dudit seuil de déformation maximal.

La nacelle de la présente invention permet de limiter la déformation des moyens de guidage à une déformation maximale prédéterminée. Cette limitation de déplacement s'applique tout particulièrement aux extrémités amont des moyens de guidage qui ont une tendance plus importante à se déformer, notamment à fléchir. En effet, les moyens de renfort reprennent les efforts mécaniques au-delà d'un certain seuil en position d'ouverture ce qui permet aux moyens de guidage d'assurer leur fonction de guidage de manière plus efficace.

Par ailleurs, lesdits moyens de renfort de la nacelle de l'invention peuvent de manière avantageuse ne reprendre les efforts que lorsqu'une déformation se produit, à savoir la forme d'origine des moyens de guidage ayant été altérée.

En effet, lors des premières utilisations où les moyens de guidage sont aptes à résister aux efforts, les moyens de renfort ne gênent pas le fonctionnement desdits moyens de guidage.

De plus, la nacelle de l'invention permet une meilleure tolérance de fabrication dans la mesure où les moyens de renfort sont aptes à absorber tout désalignement éventuel des moyens de guidage due à la fabrication de ces derniers.

Selon d'autres caractéristiques de l'invention, la structure selon l'invention comporte l'une ou plusieurs des caractéristiques optionnelles suivantes considérées seules ou selon toutes les combinaisons possibles:
- la déformation prédéterminée est selon au moins une direction appartenant à un plan sensiblement perpendiculaire à la direction principale des moyens de guidage,
- les moyens de renfort présentent entre eux ou avec un élément de la nacelle un espacement non nul en position de repos ce qui permet une zone de contact en cas d'effort excessif sur les moyens de guidage sans nécessiter la mise en place d'une zone d'interface et également sans transmettre d'effort des moyens de guidage au panneau interne, notamment la virole acoustique en condition de vol,
- les moyens de renfort comprennent un élément en saillie rapporté sur le panneau interne et présentant un espacement non nul avec les moyens de guidage en position de repos,
- les moyens de renfort sont rapportés sur le panneau interne sous la forme d'un L inversé, les moyens de guidage présentant un espacement non nul avec la partie latérale du L en position de repos ce qui permet d'éviter toute fixation sur le panneau interne,
- les moyens de renfort présentent une partie de reprise d'effort de forme sensiblement complémentaire aux moyens de guidage, ladite partie présentant un espacement non nul en position de repos avec les moyens de guidage ce qui permet de reprendre des efforts dans plusieurs directions de l'espace,
- les moyens de renfort comprennent un élément en saillie rapporté sur les moyens de guidage et un talon rapporté sur le panneau interne, ledit élément en saillie étant monté en vis-à-vis du talon avec un espacement non nul en position de repos ce qui permet d'éviter des fixations structurales sur le panneau interne, notamment la virole acoustique pour ne pas altérer la surface permettant l'absorption acoustique,
- les moyens de renfort comprennent un premier élément fixé sur le panneau externe et apte à se déplacer sur une rampe montée sur le panneau interne ce qui permet de venir se substituer à une déformation importante des moyens de guidage, notamment du flambage des rails,
- le premier élément et la rampe présente un espacement sensiblement nul ce qui permet d'accompagner et de soutenir pendant une phase de manoeuvre la structure mobile, le panneau externe, par rapport à la structure non mobile, la structure médiane,
- l'extrémité comporte un galet apte à rouler sur la rampe ce qui permet un déplacement limitant les frottements en cas d'effort,
- la rampe comporte une butée en extrémité amont ce qui permet d'éviter que l'extrémité ne tombe de la rampe en extrémité amont ce qui risquerait d'endommager encore davantage les moyens de guidage,
- les moyens de renfort comprennent un premier élément de butée monté sur les moyens de guidage et au moins un deuxième élément de buté monté sur le panneau interne, lesdits premier et deuxième(s) éléments de butée étant reliés par un moyen de liaison apte à se déformer pour reprendre les efforts subis par les moyens de guidage ce qui permet de supporter ou de prendre en compte tout déplacement venant de n'importe quelle direction de l'espace,
- le moyen de liaison est une bielle, notamment formée d'une pièce métallique, ce qui permet de ne pas altérer la position des moyens de guidage et de reprendre directement les efforts subis par le panneau externe,
- la bielle comporte un élément déformable élastiquement, ce qui permet d'obtenir une absorption plus importante des efforts subis par le panneau externe.

L'invention sera davantage comprise à la lecture de la description non limitative qui va suivre, faite en référence aux figures ci-annexées.
- Les figures 1 et 2 sont des coupes transversales de nacelle de l'air antérieur comportant un moyen de guidage,
- La figure 3 est une vue en perspective de la nacelle de l'invention,
- La figure 4 est une représentation schématique en coupe longitudinale d'un premier mode de réalisation de la structure d'entrée d'air de la figure 1 en position de fermeture,
- La figure 5 est une représentation schématique du mode de réalisation de la figure 4 en position d'ouverture,
- La figure 6 est une coupe transversale schématique de la nacelle selon l'invention,
- La figure 7 est une coupe transversale schématique d'une variante de la nacelle de la figure 6,
- Les figures 8 à 13 sont des représentations schématiques partielles d'une coupe longitudinale de variantes de nacelle selon l'invention,
- La figure 14 est un agrandissement de la zone XIV de la figure 13,
- La figure 15a est une vue en perspective partielle d'une bielle employée dans les moyens de renfort de la nacelle de la figure 13,
- Les figures 15b à 15d sont des coupes transversales de variantes de bielles employées dans les moyens de renfort de la nacelle de la figure 13.

Une nacelle 1 selon l'invention telle que représentée sur la figure 3 constitue un logement tubulaire pour un turboréacteur (non visible) dont elle sert à canaliser les flux d'air qu'il génère en définissant des lignes aérodynamiques internes et externes nécessaires à l'obtention de performances optimales. Elle abrite également différents composants nécessaires au fonctionnement du turboréacteur ainsi que des systèmes annexes tels qu'un inverseur de poussée.

La nacelle 1 est destinée à être rattachée à une structure fixe d'un avion, telle qu'une aile 2, par l'intermédiaire d'un pylône 3.

Plus précisément, la nacelle 1 possède une structure comprenant une structure d'entrée d'air 4 en amont, une structure médiane 5 entourant une soufflante (non visible) du turboréacteur, et une section aval 6 entourant le turboréacteur et abritant généralement un système d'inversion de poussée (non représenté).

La structure d'entrée d'air 4 se divise en deux zones. La première zone est une lèvre d'entrée 4a adaptée pour permettre la captation optimale vers le turboréacteur de l'air nécessaire à l'alimentation de la soufflante et des compresseurs internes du turboréacteur. La seconde zone est une section 4b plus en aval que la lèvre d'entrée d'air 4a comprenant au moins un panneau externe 40. Selon l'invention, la lèvre 4a est intégrée au(x) panneau(x) externe(s) 40 de manière à former une pièce unique démontable.

La structure d'entrée d'air 4 peut être modulaire et comprendre une pluralité de panneaux externes 40 définissant chacun une portion de lèvre d'entrée d'air 4a correspondante.

La nacelle 1 selon l'invention comprend également une structure médiane 5 comportant un carter 9. La structure médiane 5 est rattachée à la structure d'entrée d'air 4 de manière à assurer une continuité aérodynamique.

Au moins un panneau interne 41 prolonge la lèvre d'entrée d'air 4a. Le ou les panneaux internes 41 est(sont) destiné(s) à canaliser convenablement l'air vers les aubes (non représentées) de la soufflante. Le ou les panneaux internes 41 est(sont) fixé(s) à leur extrémité aval à une extrémité amont de la structure médiane 5, notamment au niveau du carter 9, par l'intermédiaire de brides de fixation. Ainsi, le ou les panneaux internes 41 forme(nt) avec la structure médiane 5 une structure fixe par rapport à la nacelle 1 de l'invention. Par ailleurs, le ou les panneaux internes 41 comprend(comprennent) une virole acoustique destinée à atténuer les nuisances sonores dues au fonctionnement du turboréacteur et aux vibrations de la structure. La virole acoustique peut être constituée d'une structure en nid d'abeille ou de toute autre structure permettant d'atténuer les nuisances sonores.

La nacelle 1 de l'invention comprend également des moyens de guidage 15 du ou des panneaux externes 40 aptes à permettre un déplacement sensiblement rectiligne du ou des panneaux externes 40 vers l'amont de la nacelle 1 de manière à pouvoir ouvrir la structure d'entrée d'air 4 selon une direction sensiblement parallèle à la direction principale des moyens de guidage 15.

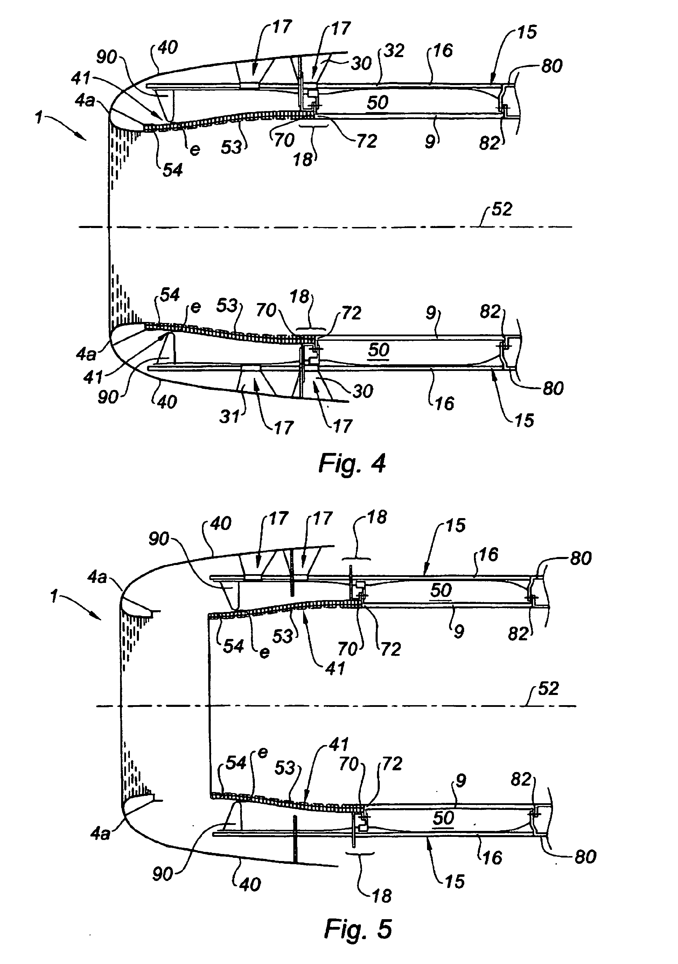

Dans le cas représenté aux figures 4 et 5, les moyens de guidage 15 sont entièrement fixés, de manière amovible, sur la structure médiane 5 comme décrit dans la demande FR 07/09105. Dans ce cas, aucune partie de la virole acoustique n'est obstruée pour permettre la fixation des moyens de guidage 15 sur la virole acoustique. De ce fait, sensiblement toute la surface acoustique de la virole est utilisable pour atténuer les nuisances sonores.

Selon le mode de réalisation représenté aux figures 4 et 5, les moyens de guidage 15 comprennent au moins un système de rails 16 et des moyens de montage 17 mobiles du panneau externe 40 sur le système de rails 16. La forme allongée du système de rails 16 permet d'assurer une fonction de liaison sur la structure médiane 5. De manière préférentielle, les moyens de guidage 15 comprennent au moins trois rails 16 de guidage qui sont répartis de manière radiale. Typiquement les systèmes de rails 16 sont répartis sensiblement à équidistance ce qui permet d'équilibrer la nacelle 1 de l'invention. Les systèmes de rails 16 sont ainsi disposés autour de la structure porteuse du turboréacteur avec les équipements nécessaire au fonctionnement de ce dernier en périphérie de la structure du carter de soufflante.

Au moins une partie des moyens de montage 17 est située en aval de la zone de jonction 18 de la structure médiane 5 et du panneau interne 41. Comme représenté sur la figure 5, en position d'ouverture, une telle configuration permet d'entraîner le panneau externe 40 sur une distance supérieure ou égale à la somme de la longueur de la zone de jonction 18 et de la longueur du panneau interne 41, afin d'accéder plus facilement aux équipements logés à l'intérieur de la nacelle 1 de l'invention.

Les moyens de montage 17 ainsi que le système de rails 16 peuvent avoir n'importe quelles formes aptes à permettre un déplacement longitudinal des moyens de montage 17 par rapport au système de rails 16. A titre d'exemple de système de rails 16, on peut citer des coulisseaux sur des rails, un rail en rigole apte à coopérer avec un système de glissière, un système de patins à rouleaux aptes à coopérer avec un rail correspondant ainsi qu'un axe longitudinal apte à coulisser à travers une ouverture correspondante.

Les moyens de guidage 15 peuvent comporter un évidement 50 sensiblement transversal par rapport à l'axe 52 de la nacelle 1 de l'invention, ledit évidement 50 étant situé en aval du panneau interne 41. Ainsi, l'évidement 50 permet d'amener, par exemple, des éléments du turboréacteur type tuyauterie et câblage de manière plus aisée tout en permettant le déplacement de la structure d'entrée d'air 4.

Dans le cas où le panneau interne 41 comporte une virole acoustique 53, cette dernière est généralement fixée à son extrémité amont 54 à la lèvre d'entrée d'air 4a par des moyens de fixations (non représentés) tels que des boulons. Ladite fixation est réalisée de manière à ce que le panneau interne 41 soit en contact permanent avec la lèvre d'entrée d'air 4a lorsque l'aéronef est en fonctionnement, notamment en vol.

L'interface entre la lèvre d'entrée d'air 4a intégrée au panneau externe 40 et la virole acoustique 53 du panneau interne peut être elle-même externe ou interne mais doit assurer une continuité aérodynamique la plus pure possible. Des moyens de centrage rigides, tels que des pions de centrage aptes à coopérer avec des alésages correspondants, ou souples, tel qu'une languette élastique, assurent cette continuité structurelle.

Un joint d'étanchéité peut être indifféremment disposé à l'interface sur l'un ou l'autre panneau interne 41 ou externe 40.

Le panneau interne 41 est fixé à son extrémité aval 70 à une extrémité amont 72 du carter 9 par tout moyen connu de l'homme du métier, notamment par l'intermédiaire d'une bride. De ce fait, le panneau interne 41 et le carter 9 forment une partie fixe de la nacelle 1 de l'invention.

L'extrémité aval 80 des moyens de guidage sont fixés, par exemple, à l'extrémité aval 82 du carter 9 par tout moyen connu de l'homme du métier.

La nacelle de 1 de la présente invention comporte en outre des moyens de renfort 90 configurés pour reprendre les efforts mécaniques des moyens de guidage 15 au-delà d'une déformation prédéterminée de ces derniers.

De manière préférentielle, la déformation prédéterminée est selon au moins une direction appartenant à un plan sensiblement perpendiculaire à la direction principale des moyens de guidage 15. Typiquement, la direction principale est sensiblement colinéaire à l'axe 52 de la nacelle 1 de l'invention. Dans le cas de système de rails, la direction principale correspond sensiblement à la direction de l'axe des rails. Dans ce cas, les rails ne sont plus alignés avec la position théorique de ces derniers.

Selon un mode de réalisation préféré non représenté, les moyens de renfort 90 présentent entre eux ou avec un élément de la nacelle 1 de l'invention, tels que le panneau interne 41, le panneau externe 40 et les moyens de guidage 15, un espacement e non nul en position de repos. On entend ici par « position de repos », la position dans laquelle les moyens de renfort ne reprennent pas les efforts subis par les moyens de guidage 15.

Selon la présente invention, les moyens de guidage 15 sont soumis à des efforts importants, les moyens de guidage 15 se déformant par rapport à leur axe principal, notamment en se désalignant ou en fléchissant. Les moyens de renfort 90 se déplacent alors pour combler l'espacement e. Ainsi, il existe une zone de contact en cas d'effort excessif sur les moyens de guidage 15 sans nécessiter la mise en place d'une zone d'interface. De plus, les efforts ne sont pas transmis des moyens de guidage 15 à la structure médiane 5, notamment la virole acoustique 53, en condition de vol.

La zone de contact dans laquelle l'espacement e est nul peut être plus ou moins souple afin de ne pas marquer l'interface par des efforts brutaux et répétés lors de l'ouverture de la structure en cas de bourrasques de vent, par exemple.

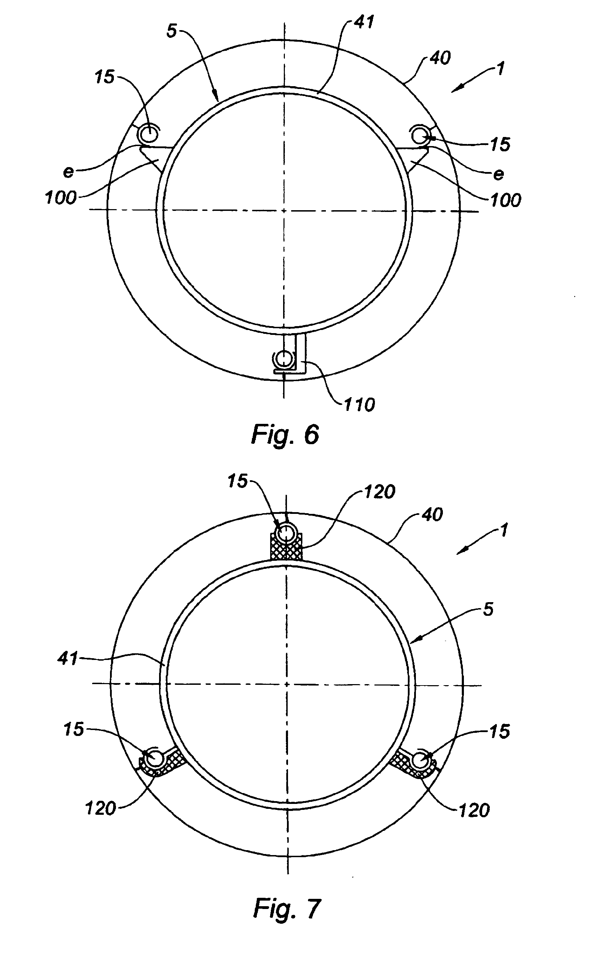

Selon un mode de réalisation préféré représenté à la figure 6, les moyens de renfort 100 comprennent un élément en saillie rapporté sur la structure médiane, notamment le panneau interne 41, et présentant un espacement non nul e avec les moyens de guidage 15 en position de repos.

Les moyens de renfort 100 ont typiquement une forme sensiblement prismatique permettant une fabrication et un montage sur la nacelle de l'invention plus aisés.

Les moyens de renfort 100 peuvent être montés directement sur la virole acoustique, sur les moyens de guidages 15, voire les deux.

Comme représenté à la figure 6, les moyens de renfort 110 sont rapportés sur le panneau interne 41, notamment la virole acoustique 53, sous la forme d'un L inversé. Dans ce mode de réalisation, les moyens de guidage 110 présentent un espacement non nul avec la partie latérale du L en position de repos. Ainsi, la partie des moyens de renforts 110 fixée sur la structure médiane 5 est réduite afin de ne pas trop impacter sur la performance acoustique de la nacelle.

De plus, il est possible que les moyens de renforts assurent la fonction de soutien des moyens de guidage 15 en extrémité amont pour diminuer les efforts subis par lesdits moyens 15.

Selon un autre mode de réalisation préférentiel représenté à la figure 7, les moyens de renfort 120 présentent une partie de reprise d'effort de forme sensiblement complémentaire aux moyens de guidage 15. L'espacement de ladite partie est également non nul en position de repos avec les moyens de guidage 15. Un tel mode de réalisation permet de reprendre des efforts dans plusieurs directions de l'espace.

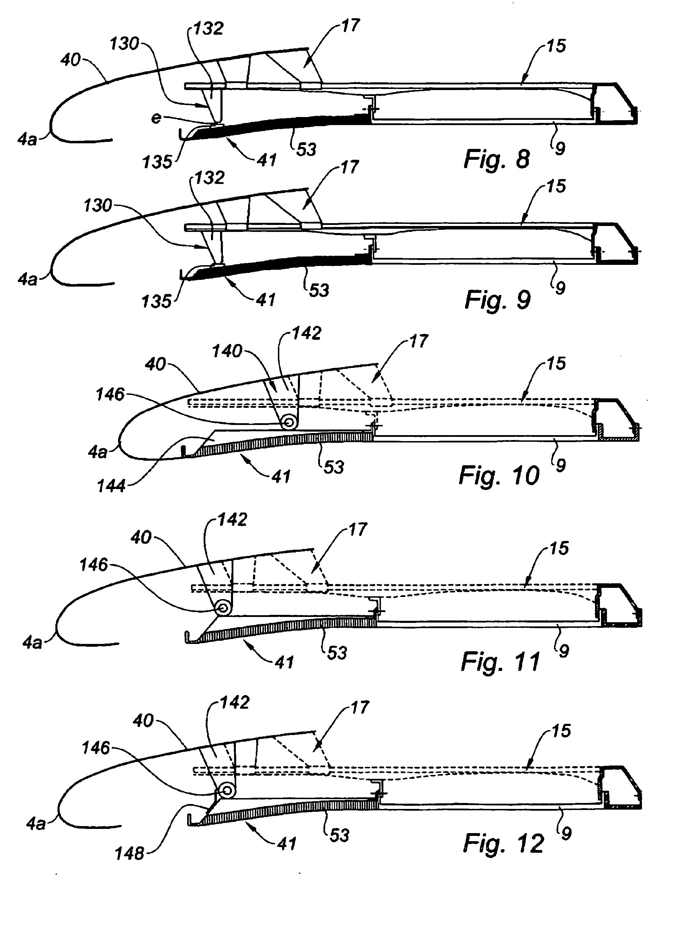

Selon encore un autre mode de réalisation préféré représenté aux figures 8 et 9, les moyens de renfort 130 comprennent un élément en saillie 132 rapporté sur les moyens de guidage 15 et un talon 134 rapporté sur le panneau interne 41. L'élément en saillie 132 est monté sensiblement en vis-à-vis du talon 134 avec un espacement e non nul en position de repos. De ce fait, ce mode de réalisation permet avantageusement d'éviter des fixations structurales sur la structure médiane 5, notamment la virole acoustique 53, pour ne pas altérer la surface permettant l'absorption acoustique.

L'espacement e peut être déterminé de sorte que cet espacement e ne soit pas nul lorsque la nacelle 1 de l'invention est en configuration de vol.

L'élément en saillie 132 peut être rapportée en extrémité amont 135 des moyens de guidage afin de reprendre les efforts des moyens de guidage 15 en extrémité amont où les moyens de guidages se déforment plus facilement.

Selon un autre mode de réalisation préféré représenté aux figures 10 et 11, les moyens de renfort 140 comprennent un premier élément 142 fixé sur le panneau externe 40 et apte à se déplacer sur une rampe 141 montée sur le panneau interne 41. Selon ce mode de réalisation avantageux, les moyens de renfort 140 ne sont pas fixés sur les moyens de guidage 15. Les moyens de renfort 140 peuvent donc se substituer à une déformation importante des moyens de guidage 14, notamment à un éventuel flambage des rails.

Typiquement, le premier élément 142 apte à se déplacer sur une rampe 141 n'est pas en contact avec cette dernière lorsqu'aucune déformation des moyens de guidage 15 ne se produit.

Selon encore une variante, le premier élément 142 et la rampe 144 peuvent présenter un espacement e sensiblement nul afin d'accompagner et de soutenir pendant une phase de manoeuvre le panneau externe 40 par rapport au panneau interne 41, notamment la virole acoustique 53. Il est ainsi possible que le premier élément 142 et la rampe 144 soient en contact lorsqu'aucune déformation des moyens de guidage 15 ne se produit mais que le premier élément 142 est apte à se déformer par élasticité de sorte à reprendre les efforts mécaniques après la déformation maximale prédéterminée.

L'extrémité 146 du premier élément peut comporter un galet apte à rouler sur la rampe 144 pour limiter les frottements en cas d'effort lors du déplacement du panneau externe 40.

Le galet comporte avantageusement un élément élastique de sorte à rester au contact de la rampe 144, notamment en cas d'imperfection de l'horizontalité de la surface de la rampe 144.

La rampe 144 peut comporter une pente ou un palier de sorte à réduire la déformation des moyens de guidage 15. Un tel mode de réalisation permet de limiter encore davantage la déformation des moyens de guidage 15 en reprenant les efforts avant la déformation maximale prédéterminée.

Selon un mode de réalisation représenté à la figure 12, la rampe 144 comporte une butée 148 en extrémité amont afin d'éviter que l'extrémité 146 du premier élément ne tombe de la rampe 144 en extrémité amont, ce en endommageant encore davantage les moyens de guidage 15.

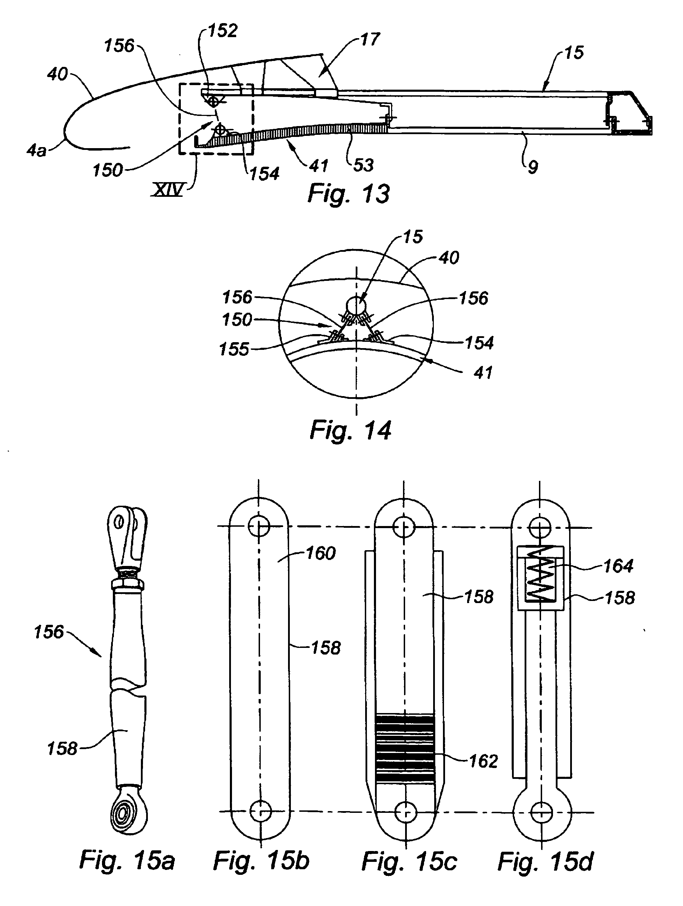

Selon un mode de réalisation représenté à la figure 13, les moyens de renfort 150 comprennent un premier élément de butée 152 monté sur les moyens de guidage 15 et au moins un deuxième élément de buté, notamment deux 154 et 155, monté sur le panneau interne 41. Les premier 152 et deuxième(s) 154 et 155 éléments de butée étant reliés par un moyen de liaison 156 apte à se déformer pour reprendre les efforts subis par les moyens de guidage 15. Un tel mode de réalisation permet de supporter ou de prendre en compte tout déplacement des moyens de guidage 15 venant de n'importe quelle direction de l'espace.

Le moyen de liaison 156 peut être réglable de sorte à mettre les moyens de guidage 15 en contrainte et ainsi d'éviter tout montage hyperstatique, à savoir un montage sous contrainte par des éléments de fixations rigides supérieurs en nombre par rapport aux trois degrés de liberté en rotation et aux trois degrés de liberté en translation.

Le moyen de liaison 156 peut être monté en extrémité amont 135 des moyens de guidage 15 en formant un angle α₁ et α₂ selon deux axes sensiblement perpendiculaires à la direction principale des moyens de guidage 15.

De manière préférentielle, le moyen de liaison 156 est une bielle 158, notamment réglable (voir figure 15a).

La bielle 158 peut être formée d'une unique pièce métallique 160 afin de ne pas altérer la position des moyens de guidage 15 et de reprendre directement les efforts subis par le panneau externe 40 (voir figure 15b).

La bielle 158 peut également comporter un élément déformable élastiquement afin d'absorber les efforts subis par le panneau externe 40 tout en limitant, voire en supprimant la déformation de la bielle.

L'élément déformable élastiquement peut ainsi être un élément en élastomère 162 et/ou un ressort 164 (voir figures 15c et 15d).

## Revendications

1. Nacelle (1) pour turboréacteur comprenant :
- une structure d'entrée d'air (4) apte à canaliser un flux d'air vers une soufflante du turboréacteur et comprenant au moins un panneau externe (40) longitudinal intégrant une lèvre d'entrée d'air (4a),
- une structure médiane (5) destinée à entourer ladite soufflante et à laquelle est rattachée la structure d'entrée d'air (4) de manière à assurer une continuité aérodynamique,
- au moins un panneau interne (41) comprenant une virole acoustique (53), fixée à son extrémité aval (70) à une extrémité amont (72) de la structure médiane (5) formant avec cette dernière une structure fixe de la nacelle (1), et
- des moyens de guidage (15) du ou des panneaux externes (40) aptes à permettre un déplacement sensiblement rectiligne du panneau externe (40) vers l'amont de la nacelle (1) de manière à pouvoir ouvrir la structure d'entrée d'air (4),
**caractérisée en ce qu'**elle comprend des moyens de renfort (90 ; 100 ; 110 ; 120; 130 ; 140 ; 150) agencés pour, d'une part, reprendre les efforts mécaniques des moyens de guidage (15) au-delà d'un seuil de déformation maximal prédéterminé de ces derniers lors de l'ouverture de la structure d'entrée d'air, et d'autre part, être inopérants en dessous dudit seuil de déformation maximal.

2. Nacelle (1) selon la revendication 1, **caractérisée en ce que** la déformation prédéterminée est selon au moins une direction appartenant à un plan sensiblement perpendiculaire à la direction principale (52) des moyens de guidage (15).

3. Nacelle (1) selon l'une quelconque des revendications précédentes, **caractérisée en ce que** les moyens de renfort (90 ; 100 ; 110 ; 120 ; 130 ; 140) présentent entre eux ou avec un élément de la nacelle (1) un espacement (e) non nul en position de repos.

4. Nacelle (1) selon la revendication précédente, **caractérisée en ce que** les moyens de renfort (100 ; 110) comprennent un élément en saillie rapporté sur le panneau interne (41) et présentant un espacement (e) non nul avec les moyens de guidage (15) en position de repos.

5. Nacelle (1) selon l'une quelconque des revendications précédentes, **caractérisée en ce que** les moyens de renfort (110) sont rapportés sur le panneau interne (41) sous la forme d'un L inversé, les moyens de guidage (15) présentant un espacement (e) non nul avec la partie latérale du L en position de repos.

6. Nacelle (1) selon l'une quelconque des revendications précédentes, **caractérisée en ce que** les moyens de renfort (120) présentent une partie de reprise d'effort de forme sensiblement complémentaire aux moyens de guidage (15), ladite partie présentant un espacement (e) non nul en position de repos avec les moyens de guidage (15).

7. Nacelle (1) selon l'une quelconque des revendications précédentes, **caractérisée en ce que** les moyens de renfort (130) comprennent un élément en saillie (132) rapporté sur les moyens de guidage (15) et un talon (134) rapporté sur le panneau interne (41), ledit élément en saillie (132) étant monté en vis-à-vis du talon (134) avec un espacement (e) non nul en position de repos.

8. Nacelle (1) selon l'une quelconque des revendications précédentes, **caractérisée en ce que** les moyens de renfort (140) comprennent un premier élément (142) fixé sur le panneau externe (40) et apte à se déplacer sur une rampe (144) montée sur le panneau interne (41).

9. Nacelle (1) selon la revendication précédente, **caractérisée en ce que** l'extrémité (146) comporte un galet apte à rouler sur la rampe (144).

10. Nacelle (1) selon l'une quelconque des revendications 8 ou 9, **caractérisée en ce que** la rampe (144) comporte une butée (148) en extrémité amont.

11. Nacelle (1) selon l'une quelconque des revendications précédentes, **caractérisée en ce que** les moyens de renfort (150) comprennent un premier élément de butée (152) monté sur les moyens de guidage (15) et au moins un deuxième élément de buté (154, 155) monté sur le panneau interne (41), lesdits premier (152) et deuxième(s) (154, 155) éléments de butée étant reliés par un moyen de liaison (156) apte à se déformer pour reprendre les efforts subis par les moyens de guidage (15).

12. Nacelle (1) selon la revendication précédente, **caractérisée en ce que** le moyen de liaison (156) est une bielle (158).

13. Nacelle (1) selon la revendication précédente, **caractérisée en ce que** la bielle (158) est formée d'une pièce métallique (160).

14. Nacelle (1) selon l'une quelconque des revendications 12 ou 13, **caractérisée en ce que** la bielle (158) comporte un élément déformable élastiquement.

## Patentansprüche

1. Gondel (1) für ein Turbotriebwerk, die umfasst:
- eine lufteingangsstruktur (4), die imstande ist, einen Luftstrom zu einem Gebläse des Turbotriebwerks zu kanalisieren und mindestens eine längliche äußere Platte (40) umfasst, die eine Lufteingangslippe (4a) integriert,
- eine mittlere Struktur (5), die dazu bestimmt ist, das Gebläse zu umschließen und an der die Lufteingangsstruktur (4) derart befestigt ist, dass eine aerodynamische Kontinuität sichergestellt wird,
- mindestens eine innere Platte (41), die einen akustischen Ring (53) umfasst, der an ihrem unterstromigen Ende (70) an einem oberstromigen Ende (72) der mittleren Struktur (5) befestigt ist, indem er mit dieser Letztgenannten eine starre Struktur der Gondel (1) bildet, und
- Führungsmittel (15) der äußeren Platte(n) (40), die imstande sind, eine etwa geradlinige Verlagerung der äußeren Platte (40) in die unterstromige Richtung der Gondel (1) derart zu erlauben, dass die Lufteingangsstruktur (4) geöffnet werden kann,
**dadurch gekennzeichnet, dass** sie Verstätkungsmittel (90; 100; 110; 120; 130; 140; 150) umfasst, die ausgebildet sind, um einerseits die mechanischen Kräfte der Führungsmittel (15) jenseits einer maximalen Verformungsschwelle dieser Letztgenannten beim Öffnen der Lufteingangsstruktur aufzunehmen und andererseits unter der maximalen Verformungsschwelle unwirksam zu sein.

2. Gondel (1) nach Anspruch 1, **dadurch gekennzeichnet, dass** die vorbestimmte Verformung gemäß mindestens einer Richtung ist, die zu einer Ebene etwa senkrecht zur Hauptrichtung (52) der Führungsmittel (15) gehört.

3. Gondel (1) nach einem der vorangehenden Ansprüche, **dadurch gekennzeichnet, dass** die Verstärkungsmittel (90; 100; 110; 120; 130; 140) zwischen sich oder mit einem Element der Gondel (1) in Ruhestellung einen Abstand (e) von nicht null aufweisen.

4. Gondel (1) nach vorangehendem Anspruch, dadurch gekenntzeichnet, dass die Verstärkungsmittel (100; 110) ein hervorstehendes Element umfassen, das auf der inneren Platte (41) angebracht ist und mit den Führungsmitteln (15) in Ruhestellung einen Abstand (e) von nicht null aufweisen.

5. Gondel (1) nach einem der vorangehenden Ansprüche, **dadurch gekennzeichnet, dass** die Verstärkungsmittel (110) auf der inneren Platte (41) in Form eins umgekehrten L angebracht sind, wobei die Führungsmittel (15) mit dem seitlichen Abschnitt des L in Ruhestellung einen Abstand (e) von nicht null aufweisen.

6. Gondel (1) nach einem der vorangehenden Ansprüche, **dadurch gekennzeichnet**, das die Verstärkungsmittel (120) eine Kräftüberhahmeabschnitt aufweisen mit etrier Form, die etwa zu den Führungsmitteln (15) komplementär ist, wobei der Abschnitt mit den Führungsmitteln (15) in Ruhestellung einen Abstand (e) von nicht null aufweist.

7. Gondel (1) nach einem der vorangehenden Ansprüche, **dadurch gekennzeichnet, dass** die Verstärkungsmittel (130) ein hervorstehendes Element (132) umfassen, das auf den Führuhgsmitteln (15) angebracht ist, und einer Absatz (134) der auf der inneren Platte (41) angebracht ist, wobei das hervorstehende Element (132) gegenüber dem Absatz (134) in Ruhestellung mit einem Abstand (e) von nicht null montiert ist.

8. Gondel (1) nach einem der vorangehenden Ansprüche, **dadurch gekennzeichnet, dass** die Verstärkungsmittel (140) ein erstes Element (142) umfassen, das auf der äußeren Plate (40) befestigt und imstande ist, sich auf einer Rampe (144) zu verlagern, die auf der inneren Platte (41) montiert ist.

9. Gondel (1) nach vorangehenden Anspruch, **dadurch gekennzeichnet, dass** das Ende (146) ein Rad aufweist, das imstande ist auf der Rampe (144) zu rollen.

10. Gondel (1) nach einem der Ansprüche 8 oder 9, **dadurch gekennzeichnet, dass** die Rampe (144) am oberstromigen Ende einen Anschlag (148) aufweist.

11. Gondel (1) nach einem der vorangehenden Ansprüche, **dadurch gekennzeichnet, dass** die Verstärkungsmittel (150) ein erstes Anschlagelement (162) umfassen, das auf den Führungsmitteln (15) montiert ist und mindestens ein zweites Anschlagelement (154, 155), das auf der inneren Platte (41) montiert ist, wobei das erste (152) und das/die zweite(n) (154, 155) Anschlagmittel durch Verbindungsmittel (156) verbunden sind, die imstande sind, sich zu verformen, um die von den Führungsmitteln (15) aufgenommene Kräfte zu übernehmen.

12. Gondel (1) nach vorangehendem Anspruch, **dadurch gekennzeichnet, dass** das Verbindungsmittel (156) eine Pleuelstange (158) ist.

13. Gondel (1) nach vorangehendem Anspruch, **dadurch gekennzeichnet, dass** die Pleuelstange (158) von einem Metallteil (160) gebildet wird.

14. Gondel (1) nach einem der Ansprüche 12 oder 13, dadurch gekenntzeichnet, dass die Pleuelstange (158) ein elastisch verformbares Element aufweist.

## Claims

1. A nacelle (1) for a turbojet engine comprising:
- an air intake structure (4) capable of channelling an air flow towards a fan of the turbojet engine and comprising at least one longitudinal external panel (40) integrating an air intake lip (4a),
- a middle structure (5) intended to surround said fan and to which is attached the air intake structure (4) so as to ensure aerodynamic continuity,
- at least one internal panel (41) comprising an acoustic ferrule (53), attached at its downstream end (70) to an upstream end (72) of the middle structure (5) forming with the latter a fixed structure of the nacelle (1), and
- means (15) for guiding external panel(s) (40) capable of allowing a substantially rectilinear displacement of the external panel (40) towards the upstream area of the nacelle (1) so as to be able to open the air intake structure (4),
**characterized in that** it comprises reinforcing means (90; 100; 110; 120; 130; 140; 150) laid out so as to absorb the mechanical forces of the guiding means (15) beyond a predetermined maximum deformation threshotd of the latter during the opening of the air intake structure on the one hand, and to be inoperative below said maximum deformation threshold.

2. The nacelle (1) according to claim 1, **characterized in that** the predetermined deformation is along at least one direction belonging to a plane substantially perpendicular to the main direction (52) of the guiding means (15).

3. The nacelle (1) according to any of the preceding claims, **characterized in that** there reinforcing means (90; 100; 110; 120; 130; 140) have between them or with an element of the nacelle (1) a non-zero space (e) in the rest position.

4. The nacelle (1) according to the preceding claim, **characterized in that** the reinforcing means (100; 110) comprise a protruding element added onto the internal panel (41) and having a non-zero space (e) with the guiding means (15) in the rest position.

5. The nacelle (1) according to any of the preceding claims, **characterized in that** the reinforcing means (110) are added onto the internal panel (41) in the form of an inverted L, the guiding means (15) having a non-zero space (e) with the side portion of the L in the rest position.

6. The nacelle (1) according to any of the preceding claims, **characterized in that** the reinforcing means (120) have a force-absorbing portion with a shape substantially mating the guiding means (15), said portion having a non-zero space (e) in the rest position with the guiding means (15).

7. The nacelle (1) according to any of the preceding claims, **characterized in that** the reinforcing means (130) comprise ein protruding element (132) added onto the guiding means (15) and a heel (134) added onto the internal panel (41), said protruding element (132) being mounted facing the heel (134) With a non-zero space (e) in the rest position.

8. The nacelle (1) according to any of the preceding claims, **characterized in that** the reinforcing means (140) comprise a first element (142) attached on the external panel (40) and capable of moving on a ramp (144) mounted on the internal panel (41).

9. The nacelle (1) according to the preceding claim, **characterized in that** the end (146) includes a roller Capable of roiling on the ramp (144).

10. The nacelle (1) according to any of claims 8 or 9, **characterized in that** the ramp (144) includes an abutment (148) at the upstream end.

11. The nacelle (1) according to any of the preceding claims, **characterized in that** the reinforcing means (150) comprise a first abutment element (152) mounted on the guiding means (15) and at feast one second abutment element (154, 155) mounted on the internal panel (41), said first (152) abutment element and second (154, 155) abutment element(s) being connected through a connecting means, (156) capable of deforming for absorbing the forces to which the guiding means (15) are subject.

12. The nacelle (1) according to the preceding claim, **characterized in that** the connecting means (156) is a connecting rod (158).

13. The nacelle (1) according to the preceding claim, characterized ih that the connecting rod (158) is formed with a metal part (160).

14. The nacelle (1) according to any of claims 12 or 13, **characterized in that** the connecting rod (158) includes an elastically deformable element.
